# FASCICULE DE BREVET EUROPEEN

(11) **EP 1 749 729 B1**
(45) Date de publication et mention de la délivrance du brevet: **10.06.2009**
(21) Numéro de dépôt: 06118124.4
(22) Date de dépôt: 28.07.2006
(51) Int. Cl.: B62B 9/20

(54) **Poussette à poignées pliables**
Kinderwagen mit klappbaren Handgriffen
Stroller with folding handles

(30) Priorité: 02.08.2005 FR 0508265
(43) Date de publication de la demande: 07.02.2007
(73) Titulaire: DOREL FRANCE SA, 49309 Cholet Cedex (FR)
(72) Inventeur: Marchand, Emmanuel, 49800 Trelaze (FR)
(74) Mandataire: Bioret, Ludovic

(56) Documents cités:
- EP-A- 1 462 334
- DE-A1- 3 049 060
- US-A- 5 687 984
- US-A1- 2004 090 046

## Description

### 1. Domaine de l'invention

Le domaine de l'invention est celui de la puériculture. Plus précisément, l'invention concerne les poussettes ou les voitures d'enfant pliables.

### 2. Solutions de l'art antérieur

On connaît de très nombreux modèles de poussettes pliables. Leur pliage permet notamment de les transporter plus facilement et de les entreposer quand elles ne sont pas utilisées. Parmi les différentes techniques de pliage connues, on distingue le pliage à plat et plusieurs techniques de pliage en trois dimensions.

US 5 687 984 qui presente l'état de la technique le plus proche, divulgue toutes les caractéristiques du préambule de la revendication 1.

L'objectif des différentes techniques de pliage de ces poussettes est d'obtenir une plus grande compacité, en position pliée. Ainsi, elles peuvent être rangées plus facilement et sont moins encombrantes.

Le pliage à plat permet de ramener les différents éléments de la poussette sensiblement dans un même plan.Le pliage en fagot est une des techniques de pliage en trois dimensions, grâce à laquelle les différents éléments de la poussette sont ramenés les uns contre les autres pour former un « fagot ». Ce pliage permet une bonne compacité de la poussette mais est assez complexe et ne s'adapte pas aux modèles de poussette les plus simples.

Le pliage canne est une autre technique de pliage en trois dimensions, dans lesquels les différents éléments de la poussette pivotent les uns par rapport aux autres pour se resserrer autour du même axe. Une telle poussette n'est réellement compacte, quand elle est pliée, que dans deux dimensions, et conserve une longueur (ou hauteur) assez importante. En effet, ces poussettes comportent des éléments tubulaires assez longs, comme les bras-poussoirs, ou les brancards portant les roues.

Certaines cinématiques de pliage des poussettes ont pour but de réduire cette longueur de la poussette pliée. On connaît par exemple pour cela des poussettes fagot dont certains éléments, comme les bras-poussoirs, peuvent coulisser lors du pliage. Cependant, ces systèmes ne résolvent pas complètement les problèmes de longueur de la poussette pliée. De plus, ils nécessitent des dispositifs mécaniques relativement complexes, et donc coûteux. Ces systèmes sont donc généralement réservés aux poussettes haut de gamme.

Cette longueur de la poussette en position pliée peut poser des problèmes lors du rangement ou du transport de la poussette. Il arrive notamment qu'une poussette soit trop longue, en position pliée, pour rentrer dans un coffre de voiture.

Le problème de l'encombrement se pose également lors du transport en nombre de poussettes neuves. Un encombrement important limite le nombre de produits transportés simultanément, et augmente en conséquence les coûts.

Un autre inconvénient des techniques connues est qu'un pliage compact suppose souvent des manipulations nombreuses et complexes. Par ailleurs, les poussettes cannes pliées présentent l'inconvénient de ne pas être stables en position debout. Il est donc nécessaire, pour les faire tenir verticalement, de les poser en appui contre un support, et elles finissent souvent par chuter.

### 3. Objectifs de l'invention

L'invention a notamment pour objectif de pallier ces inconvénients de l'art antérieur.

Plus précisément, un objectif de l'invention est de fournir une technique permettant d'améliorer la compacité des poussettes pliées, et plus particulièrement de diminuer de façon significative la longueur (ou hauteur) des poussettes pliées.

Un autre objectif de l'invention est de fournir une telle technique permettant la tenue debout des poussettes en position pliée.

Encore un autre objectif de l'invention est de fournir une telle technique qui soit particulièrement facile et peu coûteuse à mettre en oeuvre.

Un objectif particulier de l'invention est de fournir une telle technique, permettant de disposer de deux positions pliées, une position intermédiaire et rapide à obtenir, et une position compacte.

### 4. Exposé de l'invention

Ces objectifs, ainsi que d'autres qui apparaîtront par la suite, sont atteints à l'aide de charnières intégrées aux bras-poussoirs permettant une rotation d'une portion supérieure des bras poussoir par rapport à une portion inférieure de ces mêmes bras-poussoirs. Ces bras-poussoirs peuvent, selon l'invention, prendre au moins deux positions :
- une position de travail dans laquelle les deux portions sont sensiblement alignées, et
- une position de rangement dans laquelle les deux portions sont sensiblement parallèles et ramenées l'une contre l'autre.

Quand la poussette est en position pliée, il est donc possible de réduire sensiblement la longueur des bras poussoirs, et par conséquent de la poussette.

Selon un mode de réalisation avantageux de l'invention, la longueur des bras-poussoirs, dans la position de rangement, permet une tenue debout de la poussette pliée, en appui sur les charnières.

L'invention permet alors, de façon très facile, de résoudre en même temps le problème de la longueur des poussettes pliées, en particulier des poussettes cannes, et le problème de leur tenue debout.

Préférentiellement, chacune des charnières, dans la position de rangement, présente une surface sensiblement plate, permettant de faciliter la tenue debout de la poussette.

Selon un mode de réalisation préférentiel, chacune des charnières comprend des moyens de blocage permettant un verrouillage du bras poussoir correspondant dans la position de travail.

Les bras poussoirs restent ainsi en position de travail tant que l'utilisateur ne souhaite pas les replier.

Avantageusement, les moyens de blocage sont mis en oeuvre par le passage en position de travail.

La manipulation de l'utilisateur qui déplie la poussette est ainsi facilitée.

Préférentiellement, les moyens de blocage comprennent des moyens de déverrouillage permettant de quitter la position de travail.

Selon un mode de réalisation préférentiel, les moyens de blocage comprennent une tige montée perpendiculaire à l'axe des bras-poussoirs et liée à un premier élément de la charnière, et coopérant avec un crochet formé dans un second élément de la charnière.

Ces moyens de blocage permettent un verrouillage particulièrement simple et efficace des bras-poussoirs en position de travail.

Préférentiellement, la tige est mobile entre une position verrouillée dans laquelle elle coopère avec le crochet pour maintenir le bras poussoir en position de travail, et une position de déverrouillage dans laquelle elle est éloignée du crochet pour permettre le passage dans la position de rangement.

Avantageusement, une commande de déverrouillage permet de passer la tige de la position de verrouillage à la position de déverrouillage, et comprend des moyens de rappel tendant à ramener la tige en position de verrouillage.

Le mécanisme de verrouillage et de déverrouillage de la position des bras poussoirs est donc de fabrication simple et d'utilisation aisée.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est une vue partielle d'une poussette selon l'invention, en position déployée, avec les bras-poussoirs en position de travail ;
- la figure 2 représente la poussette de la figure 1 avec les bras-poussoirs en position de rangement ;
- la figure 3 représente en vue de détail la charnière de l'un des bras-poussoirs de la poussette de la figure 1 ;
- la figure 4 est une autre vue de détail de la charnière de la figure 3 ;
- la figure 5 représente la poussette de la figure 1 en position pliée, les bras-poussoirs en position de rangement.

### 6. Description détaillée de l'invention

### 6.1 Rappel du principe de l'invention

Le principe général de l'invention repose la mise en oeuvre d'une articulation (charnière) présente dans les bras-poussoirs d'une poussette, de façon à pouvoir les replier pour diminuer la longueur de la poussette.

### 6.2 Le pliage des poignées

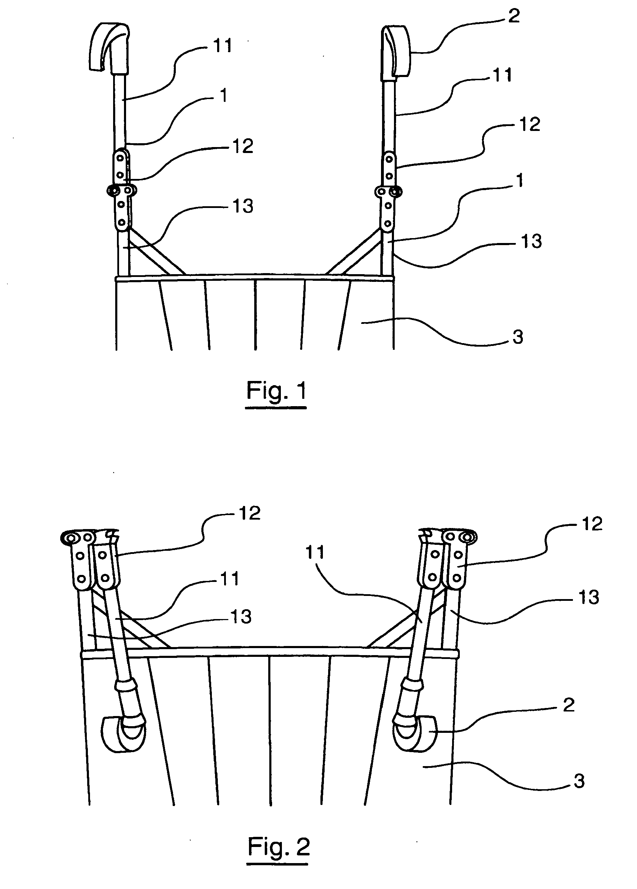

La poussette, dont un mode de réalisation est représentée partiellement sur la figure 1, comporte une structure sur laquelle est montée un hamac 3. La structure comporte deux bras-poussoirs 1, à l'extrémité desquels se trouvent les deux poignées 2.

Chacun de ces bras-poussoirs est composé de deux portions, liées par une pièce charnière 12. La portion supérieure 11 supporte les poignées 2, et la portion inférieure 13 est liée à la structure de la poussette.

La pièce charnière 12 permet la rotation de la portion supérieure 11 par rapport à la portion inférieure 13 des bras-poussoirs 1. Chaque bras poussoir peut ainsi prendre plusieurs positions, notamment une position de travail et une position de rangement.

La position de travail est représentée sur la figure 1. Dans cette position, la portion supérieure 11 et la position inférieure 13 du bras poussoir sont alignées. Cette position permet l'utilisation de la poussette. En effet, les poignées 2 sont alors accessibles pour qu'un utilisateur pousse la poussette.

La position de rangement des bras-poussoirs est représentée par la figure 2. Dans cette position, le bras poussoir est replié sur lui même, par la rotation de la portion supérieure 11 par rapport à la partie inférieure 13, autour de la pièce charnière 12. Les parties inférieure et supérieure de chaque bras poussoir sont alors ramenées l'une contre l'autre, et sensiblement parallèles. Cette position ne permet pas l'utilisation de la poussette, car les poignées ne sont plus accessibles facilement à l'utilisateur. Elle permet par contre de réduire l'encombrement de la poussette, essentiellement quand celle-ci est pliée.

### 6.3 La pièce de charnière et de verrouillage

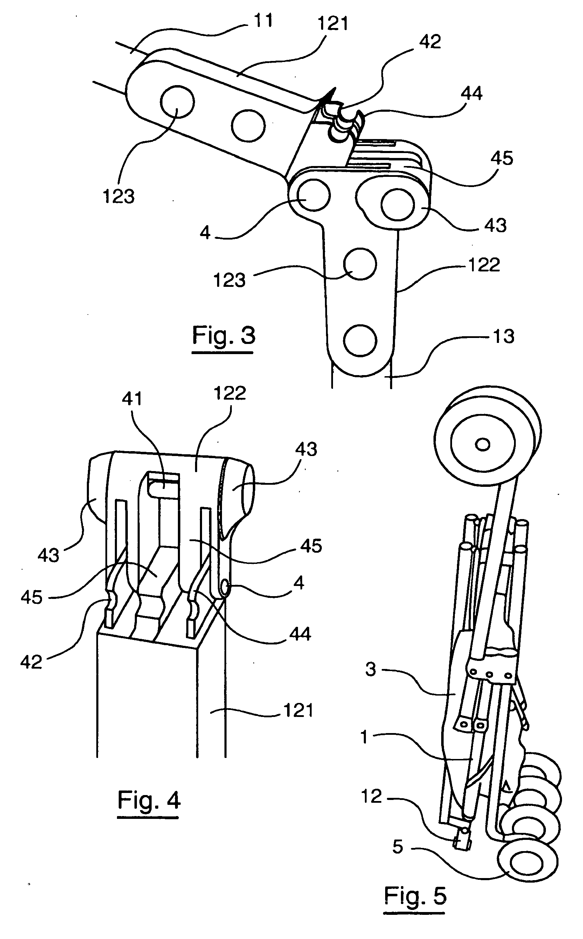

La charnière 12 est représentée plus en détail sur les figures 3 et 4, dans deux positions intermédiaires entre la position de travail et la position de rangement du bras poussoir.

Cette charnière 12 comprend deux éléments, un premier élément, ou élément inférieur 122, et un second élément, ou élément supérieur 121. Dans le mode de réalisation présenté, l'élément inférieur 122 est lié à la portion inférieure 13 du bras poussoir, et l'élément supérieur 121 est lié à la portion supérieure 11 du bras poussoir, par exemple grâce à des rivets 123.

Un axe 4 relie la partie supérieure 121 et la partie inférieure 122 de la charnière 12 en leur permettant de pivoter l'une par rapport à l'autre sur une plage angulaire d'environ 180°, entre la position de travail des bras-poussoirs et la position de rangement.

Un système de verrouillage permet de maintenir le bras poussoir dans sa position de travail. Ce système de verrouillage est composé de crochets 42 liés à l'élément supérieur 121 de la charnière, et d'une tige 41 liée à l'élément inférieur de la charnière. Cette tige 41 est montée perpendiculairement à l'axe des portions inférieure et supérieure du bras poussoir, et peut prendre une position de verrouillage ou une position de déverrouillage.

Quand le bras poussoir est en position de travail, la tige 41 en position de verrouillage coopère avec les crochets 42 pour empêcher la rotation des deux éléments de la charnière 12. Dans sa position de déverrouillage, au contraire, elle ne coopère plus avec les crochets 42. La rotation de l'élément supérieur 121 par rapport à l'élément inférieur 122 est alors possible.

Des moyens de rappel tendent à maintenir la tige 41 dans sa position de verrouillage. Des commandes de déverrouillage 43 permettent d'agir sur la tige 41 pour la faire passer dans sa position de déverrouillage. L'utilisateur peut donc actionner ces commandes 43 pour faire passer le bras poussoir en position de rangement.

Quand l'utilisateur fait passer les bras poussoir de la position de rangement à la position de travail, une portion arrondie 44 des crochets liée à l'élément supérieur 121 de la charnière agit sur la tige 41 et la repousse en position de déverrouillage. Une fois que le bras poussoir est en position de travail, la tige 41 revient en position de verrouillage sous l'action des moyens de rappel. L'utilisateur peut donc passer le bras poussoir 1 de sa position de rangement à la position de travail sans avoir à agir sur les commandes de déverrouillage 43.

### 6.4 La possibilité de faire tenir debout

La longueur des bras-poussoirs 1 en position de rangement est adaptée pour que la poussette, en position pliée, coopère avec les bras-poussoirs 1, en position de rangement, pour tenir debout. Cette situation est illustrée par la figure 5.

La figure 5 représente une poussette selon l'invention pliée dont les bras-poussoirs sont en position de rangement. La poussette occupe donc une moins grande longueur, et il est plus facile, par exemple, de la faire rentrer dans un coffre de voiture.

Il est également possible de la faire tenir debout facilement. En effet, la longueur des bras-poussoirs dans leur position de rangement est telle que la charnière 12 se trouve à un niveau proche de certaines des roues 5, quand la poussette est debout. La poussette peut donc tenir en appui très facilement sur la charnière 12 et sur certaines de ses roues 5.

La forme de la pièce charnière 12 en position ouverte participe également à la stabilité de la poussette en position debout. En effet, quand les bras-poussoirs sont en position de rangement, la pièce charnière présente des surfaces d'appui sensiblement plates, tant sur le premier élément 121 que sur le deuxième élément 122 de la charnière 12. En position de rangement des bras-poussoirs, ces deux zones plates sont alignées et forment une surface d'appui stable.

### 6.5 Autres caractéristiques et avantages

Ce pliage des bras-poussoirs présente l'avantage de permettre à l'utilisateur d'avoir deux niveaux de pliage sur sa poussette. Pour un pliage simple et rapide, par exemple pour utiliser les transports en commun, l'utilisateur peut plier la poussette sans passer les bras-poussoirs en position de rangement. La longueur de la poussette pliée est alors relativement importante. Quand l'utilisateur veut plier sa poussette de façon plus compacte, soit pour la transporter, par exemple dans un coffre de voiture, soit pour la ranger chez lui notamment en position debout, il passe les bras-poussoirs en position de rangement avant de plier la poussette, pour obtenir une plus grande compacité.

Dans certains cas, l'utilisateur peut également choisir de laisser la poussette en position dépliée, pour une utilisation plus rapide (par exemple lorsqu'elle est stockée dans un garage, ou dans un véhicule tel qu'un break ou un monospace) et simplement replier les poignées, pour réduire l'encombrement global.

Le pliage plus compact présente également des avantages pour le transport d'un grand nombre de poussettes. En effet, avant leur commercialisation, les poussettes sont souvent transportées en container, et une plus grande compacité de chaque poussette permet de mettre plus de poussettes dans un container. Le coût du transport représentant parfois une part non négligeable du coût final de la poussette, cette amélioration permet de réduire ce coût. Le coût global de ces bras-poussoirs pliables est donc très faible, ce qui permet leur mise en oeuvre même sur des poussettes à bas prix.

## Revendications

1. Poussette pliante comprenant deux poignées (2) situées aux extrémités respectives de deux bras-poussoirs (1), chacun desdits bras-poussoirs (1) comprend une portion supérieure (11) et une portion inférieure (13) reliées par une charnière (12), ladite charnière (12) permettant à chacun desdits bras-poussoirs (1) de prendre au moins deux positions, **caractérisée en ce que** les deux positions sont:
- une position de travail, dans laquelle ledit bras poussoir (1) est sensiblement rectiligne, lesdites portion supérieure (11) et portion inférieure (13) étant sensiblement alignées, et
- une position de rangement, dans laquelle ledit bras poussoir (1) est replié sur lui même, lesdites portions supérieure (11) et inférieure (13) étant sensiblement parallèles et ramenées l'une contre l'autre.

2. Poussette selon la revendication 1, **caractérisée en ce que** la longueur desdits bras-poussoirs (1), dans ladite position de rangement, permet une tenue debout de la poussette pliée, en appui sur lesdites charnières (12).

3. Poussette selon la revendication 1, **caractérisée en ce que** chacune desdites charnières (12), dans ladite position de rangement, présente une surface sensiblement plate, permettant de faciliter la tenue debout de ladite poussette.

4. Poussette selon l'une quelconque des revendications 1 à 3, **caractérisée en ce que** chacune desdites charnières (12) comprend des moyens de blocage permettant un verrouillage du bras poussoir (1) correspondant dans ladite position de travail.

5. Poussette selon la revendication 4, **caractérisée en ce que** lesdits moyens de blocage sont mis en oeuvre par le passage en position de travail.

6. Poussette selon l'une quelconque des revendications 4 et 5, **caractérisée en ce que** lesdits moyens de blocage comprennent des moyens de déverrouillage permettant de quitter ladite position de travail.

7. Poussette selon l'une quelconque des revendications 4 à 6, **caractérisée en ce que** lesdits moyens de blocage comprennent une tige (41) montée perpendiculaire à l'axe desdits bras-poussoirs et liée à un premier élément (122) de la charnière (12), et coopérant avec un crochet (42) formé dans un second élément (121) de la charnière (12).

8. Poussette selon la revendication 7, **caractérisée en ce que** ladite tige (41) est mobile entre une position verrouillée dans laquelle elle coopère avec ledit crochet (42) pour maintenir ledit bras poussoir en position de travail, et une position de déverrouillage dans laquelle elle est éloignée dudit crochet (42) pour permettre le passage dans ladite position de rangement.

9. Poussette selon la revendication 8, **caractérisée en ce qu'**une commande de déverrouillage (43) permet de passer ladite tige (41) de ladite position de verrouillage à ladite position de déverrouillage, et comprend des moyens de rappel tendant à ramener ladite tige (41) en position de verrouillage.

## Claims

1. Folding pushchair comprising two handles (2) situated at the respective ends of two pushing arms (1), each of the said pushing arms (1) comprises an upper portion (11) and a lower portion (13) connected by a hinge (12), it being possible, with the said hinge (12), for each of the said pushing arms (1) to have at least two positions, **characterized in that** the two positions are:
- a working position, in which the said pushing arm (1) is substantially rectilinear, the said upper portion (11) and lower portion (13) being substantially aligned and
- a storage position, in which the said pushing arm (1) is folded on itself, the said upper portion (11) and lower portion (13) being substantially parallel and placed against each other.

2. Pushchair according to Claim 1, **characterized in that**, due to the length of the said pushing arms (1), in the said storage position, it is possible for the folded pushchair to be stood up, supported on the said hinges (12).

3. Pushchair according to Claim 1, **characterized in that** each of the said hinges (12), in the said storage position, has a substantially flat surface, due to which it can be made easier to stand the said pushchair up.

4. Pushchair according to any one of Claims 1 to 3, **characterized in that** each of the said hinges (12) comprises means of locking, with which the corresponding pushing arm (1) can be locked in the said working position.

5. Pushchair according to Claim 4, **characterized in that** the said means of locking are used by the changeover to the working position.

6. Pushchair according to either of Claims 4 and 5, **characterized in that** the said means of locking comprise means of unlocking with which it is possible to leave the working position.

7. Pushchair according to any one of Claims 4 to 6, **characterized in that** the said means of locking comprise a rod (41) fitted perpendicular to the centre-line of the said pushing arms and connected to a first element (122) of the hinge (12) and co-operating with a hook (42) formed in a second element (121) of the hinge (12).

8. Pushchair according to Claim 7, **characterized in that** the said rod (41) is moveable between a locked position, in which it co-operates with the said hook (42) to keep the said pushing arm in the working position, and an unlocked position, in which it is apart from the said hook (42), in order that the changeover to the said storage position can take place.

9. Pushchair according to Claim 8, **characterized in that**, an unlocking control (43), enables the said rod (41) to be changed over from the said locked position to the said unlocked position and comprises return means tending to bring the said rod (41) back into the locked position.

## Patentansprüche

1. Klappbarer Kinderwagen mit zwei Handgriffen (2) an den jeweiligen Enden von zwei Schiebestangen (1), wobei jede dieser Schiebestangen (1) einen oberen Abschnitt (11) und einen unteren Abschnitt (13) umfasst, welche über ein Scharnier (12) verbunden sind, wobei dieses Scharnier (12) es jeder der Schiebestangen (1) ermöglicht, mindestens zwei Positionen einzunehmen, **dadurch gekennzeichnet, dass** es sich bei diesen beiden Positionen handelt um:
- eine Arbeitsposition, in der die Schiebestange (1) annähernd gerade ist, so dass der obere Abschnitt (11) und der untere Abschnitt (13) annähernd fluchten, und
- eine Verstauposition, in der die Schiebestange (1) zusammengeklappt ist, so dass der obere Abschnitt (11) und der untere Abschnitt (13) annähernd parallel zueinander verlaufen und aneinander liegen.

2. Kinderwagen nach Anspruch 1, **dadurch gekennzeichnet, dass** die Länge der Schiebestangen (1) in der Verstauposition das aufrechte Stehen des zusammengeklappten Kinderwagens, auf die Scharniere (12) gestützt, ermöglicht.

3. Kinderwagen nach Anspruch 1, **dadurch gekennzeichnet, dass** jedes dieser Scharniere (12) in der Verstauposition eine annähernd ebene Fläche aufweist, die es ermöglicht, das aufrechte Stehen des Kinderwagens zu erleichtern.

4. Kinderwagen nach einem der Ansprüche 1 bis 3, **dadurch gekennzeichnet, dass** jedes der Scharniere (12) Arretierungsmittel umfasst, die eine Verriegelung der entsprechenden Schiebestange (1) in der Arbeitsposition ermöglichen.

5. Kinderwagen nach Anspruch 4, **dadurch gekennzeichnet, dass** diese Arretierungsmittel beim Wechseln in die Arbeitsposition eingesetzt werden.

6. Kinderwagen nach einem der Ansprüche 4 und 5, **dadurch gekennzeichnet, dass** die Arretierungsmittel Entriegelungsmittel umfassen, die es ermöglichen, die Arbeitsposition zu verlassen.

7. Kinderwagen nach einem der Ansprüche 4 bis 6, **dadurch gekennzeichnet, dass** die Arretierungsmittel eine Stange (41) umfassen, die senkrecht zur Achse der Schiebestangen montiert ist und mit einem ersten Element (122) des Scharniers (12) verbunden ist und mit einem Haken (42) zusammenwirkt, der in einem zweiten Element (121) des Scharniers (12) ausgebildet ist.

8. Kinderwagen nach Anspruch 7, **dadurch gekennzeichnet, dass** die Stange (41) zwischen einer verriegelten Position, in der sie mit dem Haken (42) zusammenwirkt, um die Schiebestange in der Arbeitsposition zu halten, und einer Entriegelungsposition, in der sie von dem Haken (42) beabstandet ist, um das Wechseln in die Verstauposition zu ermöglichen, beweglich ist.

9. Kinderwagen nach Anspruch 8, **dadurch gekennzeichnet, dass** ein Entriegelungsbedienelement (43) es ermöglicht, die Stange (41) aus der Verriegelungsposition in die Entriegelungsposition zu führen, und Rückholmittel umfasst, die bestrebt bzw. vorgespannt sind, die Stange (41) in die Verriegelungsposition zurückzuführen.
